# EUROPEAN PATENT SPECIFICATION

(11) **EP 0 323 683 B1**
(45) Date of publication and mention of the grant of the patent: **08.09.1993**
(21) Application number: 88300048.1
(22) Date of filing: 05.01.1988
(51) Int. Cl.: C25D 3/08

(54) **Improved black chromium plating bath useful for solar selective coatings**
Schwarzchrom-Plattierungsbad für solarselektive Beschichtungen
Bain de placage de chrome noir utile pour des couches solaires selectives

(43) Date of publication of application: 12.07.1989
(73) Proprietor: Council of Scientific and Industrial Research, New Delhi 110 001 (IN)
(72) Inventor: Grips, Vatia Krishnamurthy William, Bangalore 560017 Karnataka (IN); Rajagopal, Indira, Bangalore 560017 Karnataka (IN); Rajagopalan, Sundarapandiun Rama, Bangalore 560017 Karnataka (IN)
(74) Representative: Holmes, Michael John

(56) References cited:
- FR-A- 2 266 757
- CHEMICAL ABSTRACTS, vol. 94, no. 11, June 1981, page 521, abstract no. 182528z, Columbus, Ohio, US; N. VIET: "Industrial black chromium electroplating" & KY THUAT CO' KHI 1980, (5-6), 15-16

## Description

This invention relates to the formulation of a bath for black chromium plating, which can be used in the production of solar selective coatings on die-cast steel or zinc, instruments and camera parts and consumer goods like spectacle frames, knobs, watches, pens, and parts of radios, tape recorders, televisions etc.

Black chromium is deposited by electrolysing an aqueous solution of sulphate-free chromic acid containing certain additives known as 'catalysts' at low temperature and at very high current density. These additivies and their effects are described below.

Acetate or acetic acid has been used as the catalyst. The deposit from this bath is generally powdery and grey at room temperature. Only at a temperature below 20°C does the deposit tend to become black. The black colour can be improved by adding boric acid. For obtaining black chrome deposits from acetate-based baths, the current density has to be greater than 0.5 Amp/cm² (approx. 500 A/sq.ft. (Asf)). Deposits from these baths have low u.v. stability.

Fluorides have also been used as catalysts. They give non-uniform grey coatings. Complex fluorides like cryolite, silicofluoride and fluoroborates have been used to improve the uniformity. Addition of nitrates and ferric compounds are made to these baths to improve the throwing power. Baths based on fluorides also suffer from the disadvantage of operation at temperatures less than 20°C and at current densities in the range of 44-222 A/dm² (400 to 2000 Asf).

Nitrate has been used as a catalyst for producing black chromium deposits at current densities greater than 55 A/dm² (500 Asf). Mixtures of nitrate and boric acid have been used as a catalyst. Here again a current density of 1000 Asf (approx. 1 Amp/cm²) is needed.

Catalysts like sulphamic acid, potassium ferrocyanide and ammonium borate have also been reported. These baths have to be operated at low-temperatures and at curent densities greater than 0.5 A/cm² (approx. 500 Asf).

The main deficiencies of the black chromium plating baths which have been described above are:
i. the plating has to be carried out at temperatures below 20°C;
ii. the current density needed for plating is very high (greater than 55 A/dm² (500 Asf)); and
iii. the deposit tends to be powdery with a lower absorptivity.

Since current density is very high, there will be a lot of heating due to passage of current. This increases the load on refrigeration.

Selective black coatings are used on surfaces of devices meant to collect solar energy for its utilisation. Such black coatings are characterised by very high absorptivity in the UV and visible region and very poor absorption in the near IR and IR region. Black chromium coating is one of the proven selective coatings for the collection of solar energy. One important application of black chromium plating baths is thus plating black chromium for the purpose of collecting solar energy.

In addition, black anti-reflection finishes are required on certain parts of automobiles, optical components, photographic equipment and instruments and on a variety of consumer goods for aesthetic appeal. Black chromium is ideally suited for these applications because of its good corrosion and abrasion resistance.

A black chromium plating bath is thus not only useful for black chromium plating solar collectors, but has a wide range of other applications, e.g. provision of a black chromium coating on automobile parts.

Thus, there is a need for a black chromium bath which can be operated at or above room temperature, i.e. without refrigeration, and at normal current densities.

The object of the present invention is to provide an improved black chromium plating bath useful for solar selective coatings, which can be operated at a relatively high temperature and a reasonably low current density, i.e. at room temperature or above and at normal current densities.

Another object of the invention is to provide a black chromium plating bath capable of producing a black chromium deposit with an improved ratio of absorptivity to emissivity and improved coherence.

Chemical Abstract, volume 94 (1981), 18252z (Nguyen Viet) describes a chromium plating bath containing 25g/l H₃BO₃, 10g/l NaNO₃ and 0.1 ml/l H₂SiF₆.

FR-A-2266757 describes plating baths containing 15-45 g/l boric acid or a salt thereof, which provide abrasion resistant coatings with little amorphous deposition. The baths can also contain up to 0.25 g/l of a fluoride compound (e.g. silicofluoride) or a nitrogen compound (e.g. nitrate), preferably in an amount of 2 g/l.

Accordingly in one aspect the present invention provides an improved black chromium plating bath, for example useful for solar selective coatings, which comprises an aqueous solution of sulphate-free chromic acid containing 2-20 g/l nitrate, 3-40 g/l borate and 0.2-5 g/l fluorosilicate ions. Baths containing up to 0.25 g/l fluorosilicate and more than 15 g/l borate are excluded.

The nitrate ions may be provided by an alkali metal nitrate or nitric acid. The borate ions are preferably provided by an alkali metal borate, boric acid or borax. The source of fluorosilicate ions may be selected from fluorosilicic acid and fluorosilicate.

The proportions of the ingredients of the bath may range as follows:
a) nitrate ions : 2-20 g/l
b) borate ions : 3-40 g/l
c) fluorosilicate ions : 0.2-5 g/l
d) remaining volume made up by an aqueous solution of sulphate-free chromic acid as conventionally employed for black chromium plating.

The composition is not a mere admixture. The property of the bath is not the sum total of the properties of the components. Electrolysis of sulphate-free chromic acid produces only hydrogen at the cathode - neither bright chromium nor black chromium deposits on the cathode. To obtain black chromium deposits of adequate selectivity, i.e. ratio of absorptivity to emissivity, a bath containing any one of the three catalysts or combinations of any two of them will have to be operated at low temperatures, i.e. below 20°C, and at current densities above 40 A/dm² (approx. 400 A/sq.ft.). Baths known as room temperature baths have to be operated at current densities greater than 100 A/dm² (approx. 1000 A/sq.ft.) and generally yield brownish deposits which often tend to be powdery. When all the three catalysts are mixed and used as a 'mixed catalyst', a black chromium deposit with high selectivity, i.e. α/ε, is obtained at room temperature (e.g. 30-40°C) and at low current densities (e.g. 10-30 A/dm² or approx. 100-300 A/sq.ft.). The deposit is also coherent and adherent. These results show that the three catalysts when present together act synergistically to bring about the deposition of a black chromium coating with high selectivity at room temperature and at low current density.

The bath is not very sensitive to composition changes. Throwing power of the bath is comparable to that of a chromium plating bath. The bath can work at a trivalent chromium concentration as low as 1 g/l and can tolerate up to 16 g/l. The bath can be rejuvenated and has an almost infinite shelf life.

The invention is illustrated by the following Example which, however, is not be construed to limit the scope of the invention :

### Example

Black chromium was plated from a bath, the composition of which was as given below:
1. Alkali metal nitrate : 2-20 g/l
2. Boric acid : 3.40 g/l
3. Fluorosilicate : 0.2-5 g/l
4. remaining volume made up by an aqueous solution of sulfate-free chromic acid.

The pre-plating sequence was cathodic cleaning, rinse, acid dip, rinse, nickel plate employing a nickel sulphamate bath and rinse. Black chromium plating was then carried out at 80 Asf to 300 Asf (0.07 to 0.28 Acm⁻²). The duration of plating was 40 s to 5 min. Similar experiments were performed using nitric acid, an alkali metal borate or borax and fluorosilicic acid. The absorptivity (α) and emissivity (ε) results for the black chromium plated at different temperatures and current densities are given in Table 1.

**Table 1**

| Absorptivity and Emissivity of the black chromium deposit | | | |
|---|---|---|---|
| Temp. °C | Current density A/cm² | Absorptivity α | Emissivity ε |
| 22 | 0.29 | 0.97 | 0.10 |
| 30 | 0.29 | 0.97 | 0.12 |
| 35 | 0.29 | 0.97 | 0.14 |
| 40 | 0.29 | 0.96 | 0.20 |
| 50 | 0.29 | 0.97 | 0.24 |
| 30 | 0.15 | 0.95 | 0.12 |

The improved black chromium bath of the present invention has the following advantages:
a) It is a room temperature black chromium bath. A good quality black chromium deposit is obtained in the temperature range 30 to 50°C.
b) The operating current density may be low. A good quality back chromium deposit can be obtained, for example, with a current density in the range about 0.07 to 0.28 A/cm² (80 to 300 Asf).
c) The deposit is quite coherent and is not powdery.
d) A selectivity, i.e. ratio of absorptivity to emissivity, can be achieved of better than 8. The absorptivity is at least 0.95.

## Claims

1. A black chromium plating bath which comprises an aqueous solution of sulphate-free chromic acid containing 2-20 g/l nitrate, 3-40 g/l borate and 0.2-5 g/l fluorosilicate ions (excluding compositions containing up to 0.25 g/l fluorosilicate together with more than 15 g/l borate).

2. A bath as claimed in claim 1 wherein the nitrate ions are provided by an alkali metal nitrate or nitric acid.

3. A bath as claimed in claim 1 or claim 2, wherein borate ions are provided by an alkali metal borate, boric acid or borax.

4. A bath as claimed in any one of claims 1 to 3 wherein the fluorosilicate ions are provided by fluorosilicic acid or fluorosilicate.

5. A method of black chromium plating wherein a bath as claimed in any one of the preceding claims is employed.

6. A method as claimed in claim 5 wherein said plating is carried out at a temperature above 20°C.

7. A method as claimed in claim 6 wherein said plating is carried out at a temperature of about 30°C to 50°C.

8. A method as claimed in any one of claims 5 to 6 wherein said plating is carried out at a current density of about 0.08 to 0.3 A/cm².

9. A method as claimed in any one of claims 5 to 8 wherein said plating is carried out for a period of about 40 seconds to 5 minutes.

10. A method as claimed in any one of claims 6 to 9 wherein the plating is carried out so as to produce a black chromium deposit having an absorptivity of at least 0.95.

11. A method as claimed in any one of claims 6 to 9 wherein the plating is carried out so as to produce a black chromium deposit having a ratio of absorptivity to emissivity of more than 8.

## Patentansprüche

1. Schwarzchrom-Plattierungsbad, das eine wäßrige Lösung von sulfatfreier Chromsäure, enthaltend 2 bis 20 g/l Nitrat, 3 bis 40 g/l Borat und 0,2 bis 5 g/l Fluorosilikationen, umfaßt (ausgenommen Zusammensetzungen, enthaltend bis zu 0,25 g/l Fluorosilikat zusammen mit mehr als 15 g/l Borat).

2. Bad gemäß Anspruch 1, worin die Nitrationen durch ein Alkalimetallnitrat oder Salpetersäure geliefert werden.

3. Bad gemäß Anspruch 1 oder 2, worin Borationen durch ein Alkalimetallborat, Borsäure oder Borax geliefert werden.

4. Bad gemäß einem der Ansprüche 1 bis 3, worin die Fluorosilikationen durch Fluorokieselsäure oder Fluorosilikat geliefert werden.

5. Verfahren zur Schwarzchrom-Plattierung, worin ein Bad gemäß einem der vorhergehenden Ansprüche verwendet wird.

6. Verfahren gemäß Anspruch 5, worin die Plattierung bei einer Temperatur oberhalb 20°C durchgeführt wird.

7. Verfahren gemäß Anspruch 6, worin die Plattierung bei einer Temperatur von etwa 30 bis 50°C durchgeführt wird.

8. Verfahren gemäß einem der Ansprüche 5 bis 6, worin die Plattierung bei einer Stromdichte von etwa 0,08 bis 0,3 A/cm² durchgeführt wird.

9. Verfahren gemäß einem der Ansprüche 5 bis 8, worin die Plattierung während einer Dauer von etwa 40 Sekunden bis zu 5 Minuten durchgeführt wird.

10. Verfahren gemäß einem der Ansprüche 6 bis 9, worin die Plattierung derart durchgeführt wird, daß eine Schwarzchromabscheidung mit einem Absorptionsvermögen von zumindest 0,95 gebildet wird.

11. Verfahren gemäß einem der Ansprüche 6 bis 9, worin die Plattierung derart durchgeführt wird, daß eine Schwarzchromabscheidung mit einem Verhältnis von Absorptionsvermögen zu Emissionsvermögen von mehr als 8 gebildet wird.

## Revendications

1. Bain de chromage noir, qui comprend une solution aqueuse d'acide chromique exempt de sulfate et contenant de 2 à 20 g d'ions nitrate/litre, de 3 à 40 g d'ions borate/litre et de 0,2 à 5 g d'ions fluorosilicate/litre (à l'exclusion de compositions contenant jusqu'à 0,25 g de fluorosilicate/litre en même temps que plus de 15 g de borate/litre).

2. Bain suivant la revendication 1, dans lequel les ions nitrate sont fournis par un nitrate de métal alcalin ou par de l'acide nitrique.

3. Bain suivant la revendication 1 ou 2, dans lequel les ions borate sont fournis par un borate de métal alcalin, par de l'acide borique ou par du borax.

4. Bain suivant l'une quelconque des revendications 1 à 3, dans lequel les ions fluorosilicate sont fournis par de l'acide fluorosilicique ou par un fluorosilicate.

5. Procédé de chromage noir, qui consiste à utiliser un bain tel que revendiqué à l'une quelconque des revendications précédentes.

6. Procédé suivant la revendication 5, qui consiste à effectuer le chromage à une température supérieure à 20°C.

7. Procédé suivant la revendication 6, qui consiste à effectuer le chromage à une température de 30° à 50°C environ.

8. Procédé suivant l'une quelconque des revendications 5 à 6, qui consiste à effectuer le chromage à une densité de courant de 0,08 à 0,3 A/cm² environ.

9. Procédé suivant l'une quelconque des revendications 5 à 8, qui consiste à effectuer le chromage pendant une durée de 40 secondes à 5 minutes environ.

10. Procédé suivant l'une quelconque des revendications 6 à 9, qui consiste à effectuer le chromage de manière à produire un dépôt de chrome noir ayant une absorptivité d'au moins 0,95.

11. Procédé suivant l'une quelconque des revendications 6 à 9, qui consiste à effectuer le chromage de manière à produire un dépôt de chrome noir ayant un rapport de l'absorptivité à l'émissivité supérieur à 8.
